Europäisches Patentamt

European Patent Office

Office européen des brevets

(19)

(11) Veröffentlichungsnummer : **0 413 723 B1**

(12) # EUROPÄISCHE PATENTSCHRIFT

(45) Veröffentlichungstag der Patentschrift :
29.01.92 Patentblatt 92/05

(51) Int. Cl.$^5$ : **B60T 8/66**

(21) Anmeldenummer : 89905081.9

(22) Anmeldetag : 26.04.89

(86) Internationale Anmeldenummer :
PCT/EP89/00457

(87) Internationale Veröffentlichungsnummer :
WO 89/10863 16.11.89 Gazette 89/27

(54) **REGELSYSTEM FÜR ABS UND ASR-ANWENDUNG.**

(30) Priorität : 03.05.88 DE 3814956

(43) Veröffentlichungstag der Anmeldung :
27.02.91 Patentblatt 91/09

(45) Bekanntmachung des Hinweises auf die
Patenterteilung :
29.01.92 Patentblatt 92/05

(84) Benannte Vertragsstaaten :
DE FR GB IT SE

(56) Entgegenhaltungen :
DE-A- 2 204 092
DE-A- 3 535 843
DE-A- 3 625 945
US-A- 3 967 862

(73) Patentinhaber : ROBERT BOSCH GmbH
Postfach 10 60 50
W-7000 Stuttgart 10 (DE)

(72) Erfinder : CAO, Chi-Thuan
Tubizerstra e 35
W-7015 Korntal-Münchingen 1 (DE)

(74) Vertreter : Kammer, Arno
Postfach 10 56 08 Grenzhöfer Weg 36
W-6900 Heidelberg 1 (DE)

## Beschreibung

### Stand der Technik

Z.B. aus der DE OS 35 35 843 ist es bekannt, unter Verwendung der gemessenen Geschwindigkeit eines Fahrzeugrads und des gemessenen Bremsdrucks in aufeinanderfolgenden Abtastzeitpunkten ... (K-1), K, (K+1) ... mit Hilfe einer Differenzengleichung und unter Anwendung bekannter Identifikationsalgorithmen Parameter abzuschätzen und mit Hilfe dieser Parameter Schätzwerte $\hat{\mu}_{(K)}$ für den Kraftschlußbeiwert zwischen Reifen und Straße zu ermitteln. Mit Hilfe der $\hat{\mu}$-Werte läßt sich die Steigung der $\mu$-Schlupf-Kurve

$$K_\mu = \frac{d\hat{\mu}}{ds}$$

im Betriebspunkt ermitteln und bei einem Antiblockierregler zur Erzielung einer optimalen Regelung einsetzen. Die Steigung $K_\mu$ der $\mu$-Schlupfkurve dient dabei als Regelgröße und der Bremsdruck wird so geregelt, daß $K_\mu$ einem kleinen, positiven Wert entspricht. Dabei wird immer ein Schlupf eingestellt, der links vom Maximum der $\mu$-Schlupfkurve jedoch sehr nahe beim Maximum liegt.

### Vorteile der Erfindung

Die Erfindung geht von dem bekannten Regelsystem aus, erweitert es auf den ASR-Fall und verbessert das System dadurch, daß es die Verstärkung zusätzlich von dem ermittelten $\hat{\mu}$ abhängig macht und den Regelverstärker entsprechend bemißt.

Im ABS-Fall wird über das kontinuierliche Stellglied (z.B. Proportionalventil) der Bremsdruck beeinflußt, im ASR-Fall zur Änderung des Antriebsmoments z.B. die Menge des zugeführten Kraftstoffs pro Zeiteinheit, die Zündung oder der Bremsdruck an den angetriebenen Rädern in Abhängigkeit von $K_{\hat{\mu}}$ variiert. Gemessen wird in beiden Fällen die Radgeschwindigkeit und außerdem wird eine dem Bremsmoment bzw. Antriebsmoment entsprechende Größe (z.B. der Bremsdruck bzw. die Einspritzmenge pro Zeiteinheit) erermittelt.

Weiterbildungen für die erfindungsgemäße Beeinflussung der Verstärkung des Regelverstärkers sind den Unteransprüchen und der Figurenbeschreibung zu entnehmen.

Da die Stellgröße kontinuierlich verläuft, handelt es sich um einen kontinuierlichen Regler.

Der Regler ist außerdem adaptiv, weil einmal $\hat{K}\mu$ nicht direkt gemessen wird, sondern durch eine Parameterschätzung ermittelt wird. Außerdem werden die Reglerparameter den momentanen $\hat{\mu}$-Werten laufend angenpaßt.

Der erfindungsgemäße Regler nutzt den optimalen bzw. nahezu optimalen Kraftschluß aus. Er ist, da keine Umschaltschwellen verwendet werden, applikationsfreudlich.

### Figurenbeschreibung

Anhand der Zeichnung werden Ausführungsbeispiele der Erfindung erläutert.

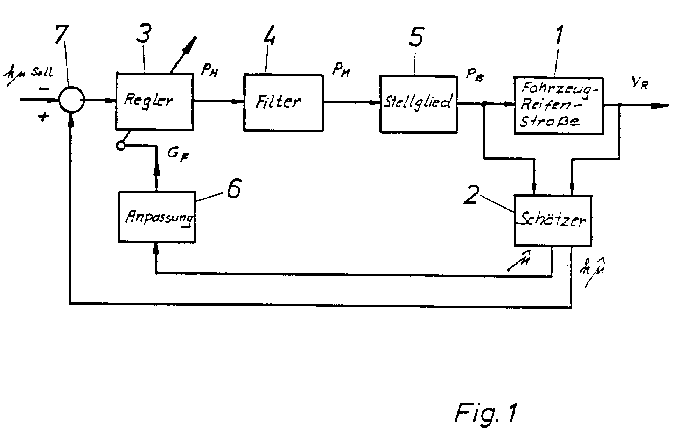

Fig. 1 zeigt den Regelkreis bei einer ABS-Anwendung.

In Fig. 1 ist mit 1 das System Fahrzeug-, Reifen-, Straße bezeichnet. Diesem wird links der Bremsdruck $P_B$ zugeführt. Rechts ist als Ausgangsgröße die Radgeschwindigkeit $V_R$ angegeben. Den Größen $P_B$ und $V_R$ entsprechende Signale werden einem Schätzer 2 zugeführt, der z.B. in der aus der DE-A- 35 35 843 bekannten Weise hieraus in aufeinanderfolgenden Abtastzeitpunkten K Schätzwerte $\hat{\mu}_{(K)}$ und $\hat{K}_{\mu(K)}$ für den augenblicklichen kraftschlußbeiwert bzw. für die augenblickliche Steigung der $\mu$-Schlupf-Kurve abgibt. Der Schätzwert $\hat{K}_{\mu(K)}$ wird als Istwert einem Subtrahierer 7 zugeführt. Diesem wird auch ein kleiner positiver Wert $K_{\mu, \text{ soll}}$ als Sollgröße zugeführt. Einem Regelverstärker 3 wird dann die Differenz des Istwertsignals und des Sollwerts $K_{\mu,\text{soll}}$ als Regelgröße zugeführt. Er weist vorzugsweise proportionales und integrales Verhalten auf. Wie später noch gezeigt wird, wird er an das augenblickliche $\hat{\mu}_{(K)}$ angepaßt werden. Sein Ausgangssignal $P_H$ wird in einem Filter 4 geglättet. Das dabei entstehende Signal $P_M$ beeinflußt ein kontinuierlich einstellbares Stellglied 5, z.B. ein Proportionalventil, über das der benötigte Bremsdruck $P_B$ in der Radbremse (in 1) eingesteuert wird.

Über ein Anpassungsglied 6 wird um ein besseres dynamisches Verhalten und bessere Stabilität des Regelkreises zu erzielen, der Verstärkungsfaktor des Regelverstärkers 3 in Abhängigkeit vom ermittelten $\hat{\mu}_{(K)}$ laufend angepaßt. Dies erfolgt vorzugsweise nach folgendem Gesetz:

Grundeinstellung: $K_R = K_{R,0}$ (die beste aber noch stabile Einstellung z. B. für $\hat{\mu} = 0,1$)

$$\text{Anpassungsfaktor: } G_F = 1 - \sigma \cdot \hat{\mu} = \begin{cases} G_{F,min} & \text{für } G_F < G_{F,min} \\ G_{F,max} & \text{für } G_F > G_{F,max} \end{cases}$$

Anpassung: $K_R = \dfrac{K_{R,0}}{G_F}$

Ausgehend von einer Grundeinstellung $K_{R,0}$ der Reglerverstärkung wird in jedem Rechenschritt ($\hat{=}$ Abtastintervall $T_A$) ein Anpassungsfaktor $G_F$ berechnet, der dann die neue Einstellung $K_R$ bestimmt. Der Anpassungsfaktor hängt vom $\hat{\mu}$ ab, wobei o die Anpassungsgeschwindigkeit bedeutet. o kann wiederum als konstant oder in Abhängigkeit von $\hat{\mu}$ gewählt werden ($\hat{\mu}$ groß, dann wird $\sigma$ groß).

Der Regelkreis für den ASR-Fall unterscheidet sich von dem der Fig. 1 dadurch, daß die Eingangsgröße des Systems Fahrzeug/Reifen/Straße nicht der Bremsdruck, sondern z.B. die Menge des dem Motor pro Zeiteinheit zugeführten Kraftstoffs $M_E$ ist. Diese wird z.B. gemessen und dem Schätzer 2 zugeführt, der $\hat{\mu}_{(K)}$ und $\hat{K}_{\mu(K)}$ ermittelt. Die Istgröße ist auch hier $\hat{K}_{\mu(K)}$ und die Sollgröße ist wieder $K_{\mu,soll} \approx 0$ oder gleich 0. Die Signale an den Ausgängen der Glieder 3 und 4 entsprechen nun keinen Drücken sondern Kraftstoffmengen pro Zeiteinheit. Hierfür gebräuchliche Stellglieder sind z.B. in Zusammenhang mit E-Gas bekannt geworden.

**Patentansprüche**

1. Regelsystem, bei dem ein auf ein Fahrzeug wirkendes Moment (Antriebs- oder Bremsmoment) geregelt wird, wobei die Geschwindigkeit $V_R$ eines Fahrzeugrads und eine diesem Moment entsprechende Größe gemessen und aus den Meßwerten jeweils zu Abtastzeitpunkten ...(K-1), K, (K+1) durch Schätzung der Kraftschlußbeiwert $\hat{\mu}_{(K)}$ und die augenblickliche Steigung $\hat{K}_{\mu(K)} = \dfrac{d\mu}{ds}$ der µ-Schlupfkurve am augenblicklichen Betriebspunkt ermittelt und zur Regelung des auf das Fahrzeug wirkenden Moments mittels eines Stellglieds auf einen Wert, dem ein Betriebspunkt in der Nähe jedoch links des Maximums der µ-Schlupfkurve entspricht, benutzt wird, <u>dadurch gekennzeichnet</u>, daß der Regelverstärker vorzugsweise als kontinuierlicher Regler mit proportionalem und integralem Verhalten ausgebildet ist und daß die Regelverstärkung in Abhängigkeit vom ermittelten Kraftschlußbeiwert $\hat{\mu}_{(K)}$ verändert wird.

2. Regelsystem nach Anspruch 1, dadurch gekennzeichnet, daß die Veränderung proportional zum Kraftschlußbeiwert $\hat{\mu}_{(K)}$ erfolgt.

3. Regelsystem nach Anspruch 1 oder 2, dadurch gekennzeichnet, daß die Regelverstärkung $K_R$ dem Gesetz

$$K_R = \frac{K_{RO}}{1 - \sigma \hat{\mu}}$$

entspricht, wobei $K_{R0}$ eine noch stabile Einstellung für ein bestimmtes $\hat{\mu}$ und $\sigma$ die Anpassungs-geschwindigkeit ist.

4. Regelsystem nach Anspruch 3, dadurch gekennzeichnet, daß der Anpassungs-faktor $G_F = (1 - \sigma\hat{\mu})$ durch Grenzwerte $G_{F, min} \leqq G_F \leqq G_{F,max}$ begrenzt ist.

**Claims**

1. Automatic control system, in which a torque (driving or braking torque) acting on a vehicle is controlled, the speed $V_R$ of a vehicle wheel and a variable corresponding to this torque being measured and the coefficient of adhesion $\hat{\mu}_{(K)}$ and the instantaneous slope $\hat{K}_{\mu(K)} = \dfrac{d\mu}{ds}$ of the µ-slip curve at the instantaneous operating point being determined, in each case at sampling instants ... (K-1), K, (K+1), by estimation from the measured values and used to adjust the torque acting on the vehicle, by means of a final controlling element, to a value to which an operating point close to but to the left of the maximum of the µ-slip curve corresponds, characterised in that the control amplifier is preferably designed as a continuous controller with a proportional and integral action and in that the control gain is altered as a function of the determined coefficient of adhesion $\hat{\mu}_{(K)}$.

2. Control system according to Claim 1, characterised in that the alteration is effected in a manner proportional to the coefficient of adhesion $\hat{\mu}_{(K)}$.

3. Control system according to Claim 1 or 2, characterised in that the control gain $K_R$ corresponds to the law

$$K_R = \frac{K_{R0}}{1 - \sigma\hat{\mu}},$$

$K_{R0}$ being a still stable setting for a particular $\hat{\mu}$ and $\sigma$ being the adaptation rate.

4. Control system according to Claim 3, characterised in that the adaptation factor $G_F = (1 - \sigma\hat{\mu})$ is limited by limit values $G_{F,min} \leqq G_F \leqq G_{F,max}$.

**Revendications**

1. Système de réglage pour régler un couple (couple d'entraînement ou couple de freinage) agissant sur un véhicule, procédé dans lequel la vitesse V d'une roue du véhicule ainsi qu'une grandeur correspondant à ce couple sont mesurées, et à partir des valeurs respectivement mesurées aux instants d'exploration ... (K-1), K, (K+1), le coefficient d'adhérence ($\mu_K$) et la pente momentanée $K_\mu = (K)\frac{dy}{d\varepsilon}$ de la courbe de patinage $\mu$ sont déterminés par évaluation et sont utilisés pour permettre, au moyen d'un organe de réglage, la régulation du couple agissant sur le véhicule à une valeur à laquelle correspond un point de fonctionnement se situant au voisinage du maximum de la courbe de patinage, système de réglage caractérisé en ce que l'amplificateur de réglage revêt de préférence la forme d'un régulateur continu, l'amplificateur du réglage est modifiée en fonction de la valeur du coefficient d'adhérence $\mu_{(K)}$ qui a été déterminé.

2. Système de réglage selon la revendication 1, caractérisé en ce que cette modification s'effectue proportionnellement au coefficient d'adhérence $\mu_{(K)}$.

3. Système de réglage selon la revendication 1 ou la revendication 2, caractérisé en ce que l'amplification ($K_R$) du réglage correspond à la loi $K_R = \frac{K_{R0}}{1 - \sigma\mu}$, $K_{R0}$ étant un réglage encore stable pour un $\mu$ déterminé et $\sigma$ la vitesse d'adaptation.

4. Système de réglage selon la revendication 3, caractérisé en ce que le facteur d'adaptation $G_F = (1 - \sigma\mu)$ se situe entre des valeurs limites : $G_{F, min} \leqq G_F \leqq G_{F, max}$.

Fig. 1